# EUROPEAN PATENT APPLICATION

(11) **EP 0 856 988 A2**
(43) Date of publication of application: **05.08.1998**
(21) Application number: 98100721.4
(22) Date of filing: 16.01.1998
(51) Int. Cl.: H04N 1/41

(54) **System and method for compressing textual image data**

(30) Priority: 31.01.1997 US 794259
(71) Applicant: Hewlett-Packard Company, Palo Alto, CA 94303 (US)
(72) Inventor: Graham, James J., Fort Collins, Colorado 80525 (US)
(74) Representative: Molyneaux, Martyn William

(57) **Abstract**

A novel system and method for compressing image data scanned by an optical scanner (346) is presented. The scanned image is divided into a predetermined number of cells (510). Each cell is then compressed (540) based upon a classification (530); the classifications are determined via histogram analysis (520) of each cell. The present method allows for decompressing the entire image, as well as any area of the scanned image by way of an identifier byte.

## Description

### FIELD OF THE INVENTION

The present invention relates generally to computer systems and more particularly to a system and method for data compression of scanned computer images.

### BACKGROUND OF THE INVENTION

An optical scanner is used to generate machine-readable data which is representative of a scanned object such as a document or photograph. This is typically accomplished by employing a controlled light source located within the base of the scanner. The light source is reflected off the surface of a document and back onto an array of photosensitive devices which convert the light intensity into an electronic signal. Other scanner configurations include transmitting the fight source through a transparent document, and then onto the array of photosensitive devices The intensity of the light source is controlled, via a closed loop or an open loop, by utilizing calibration circuitry located within the scanner base.

Processing the machine-readable data involves either (1) uncompressed data or (2) compressed data using different compression methods for different data types. In the first instance, there is typically more image data than memory (e.g., 10 megabytes (MB) of image data and only 4 MB of memory). This requires virtual memory to swap the image data in and out of memory, using the hard disk as temporary storage. In the second instance, the current compression methods either require special hardware for optimal performance or leaves large portions of the image data unprocessed.

Optical scanners and various components used within such scanners are disclosed in U.S. Patent No. 4,926,041 for OPTICAL SCANNER of David W. Boyd; U.S. Patent No. 4,937,682 for METHOD AND APPARATUS FOR PROVIDING CONTRAST/INTENSITY CONTROL IN A DOCUMENT SCANNER of Dan L. Dalton; U.S. Patent No. 5,019,703 for OPTICAL SCANNER WITH MIRROR MOUNTED OCCLUDING APERTURE OR FILTER of David W. Boyd and John S. Deutschbein; and U.S. Patent No. 5,038,028 for OPTICAL SCANNER APERTURE AND LIGHT SOURCE ASSEMBLY of David W. Boyd and C. William Elder, Jr.

### SUMMARY OF THE INVENTION

The present invention provides a novel system and method for compressing image data scanned by an optical scanner. The present invention provides very fast image data compression, the image data being indicative of text and lineart. The present system takes strips of image data from a scanner as the image is being scanned. A rectangular grid of cells is then constructed from these strips. A histogram of each cell is used to classify the cell as one of four classification types. Each cell is then compressed based upon its classification. Using preceding identifier bytes, the present method allows for decompressing the entire image, as well as specific sub-areas of the scanned image.

### BRIEF DESCRIPTION OF THE DRAWINGS

FIG. 1 shows a block diagram of a side view of an optical scanner.

FIG. 2 shows a block diagram of the control block in the optical scanner.

FIG. 3 shows a block diagram of a general purpose digital computer system incorporating the present invention.

FIG. 4 shows a flow diagram of the present invention.

FIG. 5 shows a more detailed flow diagram of the present invention.

FIG. 6 shows a data flow diagram according to the present invention.

### DETAILED DESCRIPTION OF THE PREFERRED EMBODIMENT

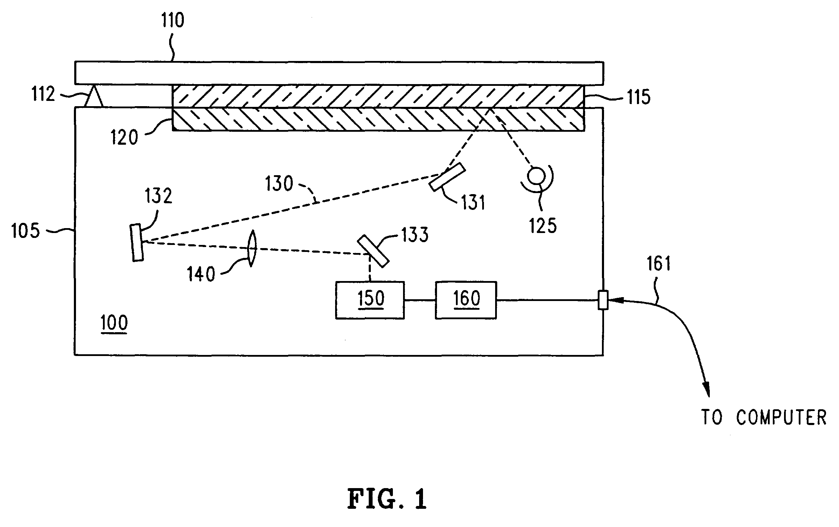

FIG. 1 illustrates an optical scanner 100 of a type adapted to produce machine- readable data representative of a color image of an object which is scanned. The machine- readable data produced by the scanner 100 is adapted to be received and used by a digital computer in a conventional manner. For example, the data may be stored on a computer memory device or may be used to produce a color display of the object on a CRT or a color print.

FIG. 1 shows a block diagram of a side view of the optical scanner according to the present invention. Scanner 100 has a scanner base 105 and a scanner lid 110. The lid 110 is attached to the base 105 via a hinge 112 such that the lid 110 can pivot about a center axis of the hinge; this permits easy access to the image area (i.e., that area disposed between the base 105 and the lid 110). The hingeably-attached lid 110 ensures manual access to any target media in the image area. A target medium 115 is disposed above a transparent platen 120 in the image area.

A lamp 125 projects a narrow line of light through the platen 120, onto the surface of the target 115. If the target 115 is opaque, as in the case of a document or photograph, the light (illustrated by light path 130) is reflected off the surface of the target 115, onto mirrors 131 and 132. These mirrors 131,132 reflect the light through a focusing lens 140 onto mirror 133. The light is then reflected onto photodetector array 150. In one preferred embodiment, the lamp 125, together with mirror 131, track along a horizontal line below the target 115 for detection by photodetector array 150. In another embodiment, target 115 is moved past a stationary lamp 125 via a drive roller and idlers (not shown).

Photodetector array 150 converts light intensity into an electrical signal for an internal controller 160 which, among other things, controls the power to the lamp 125, and adjusts in accordance with the photodetector electrical signal. In a preferred embodiment, the photodetector array 150 comprises charged-coupled devices (CCDs). In another preferred embodiment, the CCDs are capable of processing from 2550 pixels at 300 dots per inch (dpi) resolution for an 8.5 x 11 inch image area, up to 5400 pixels at 600 dpi resolution for an A4 image area. The internal controller 160 may send image data to a microprocessor-based system, including a computer or a printer, via link 161. In a preferred embodiment, the link 161 is compatible with the SCI bus protocol (akin to RS-232). Other bus protocols, such as SCSI and HPIB could be used without departing from the scope of the present invention. The computer, or other device, can also send commands to the internal controller 160 via link 161.

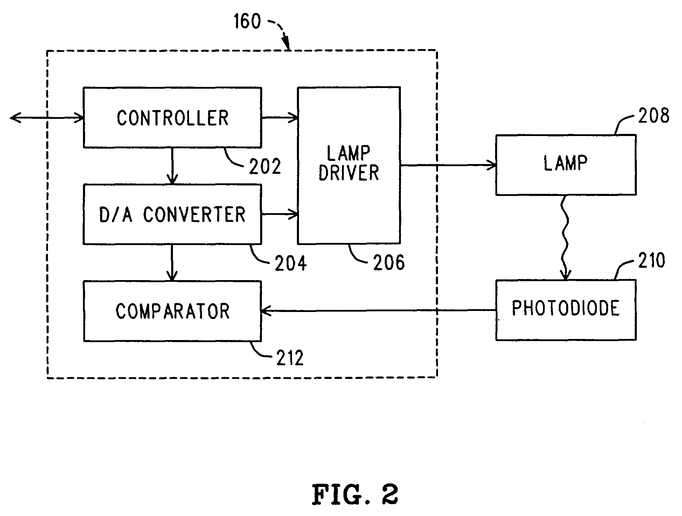

FIG. 2 shows a block diagram of the control block. The control block 160 is centered around a microcontroller 202. The microcontroller 202 may be, for example, a 68HC05 microcontroller available from Motorola, Inc., Schaumburg, IL. The microcontroller 202 receives commands from the scanner via the serial communications link 161. Commands sent from the scanner include, among other things, turn on the lamp, change fight intensity, and report status.

The microcontroller 202 drives a digital-to-analog converter (DAC) 204 and a lamp driver 206. One output of the DAC 204 is connected to the lamp driver 206, while a second DAC output is connected to a comparator 212. The comparator 212 also receives input from a photodiode which measures the light intensity of the lamp 208 and converts it to an analog signal. This signal is then supplied to the comparator 212 as feedback to maintain the tight intensity of the lamp 208 at a constant level.

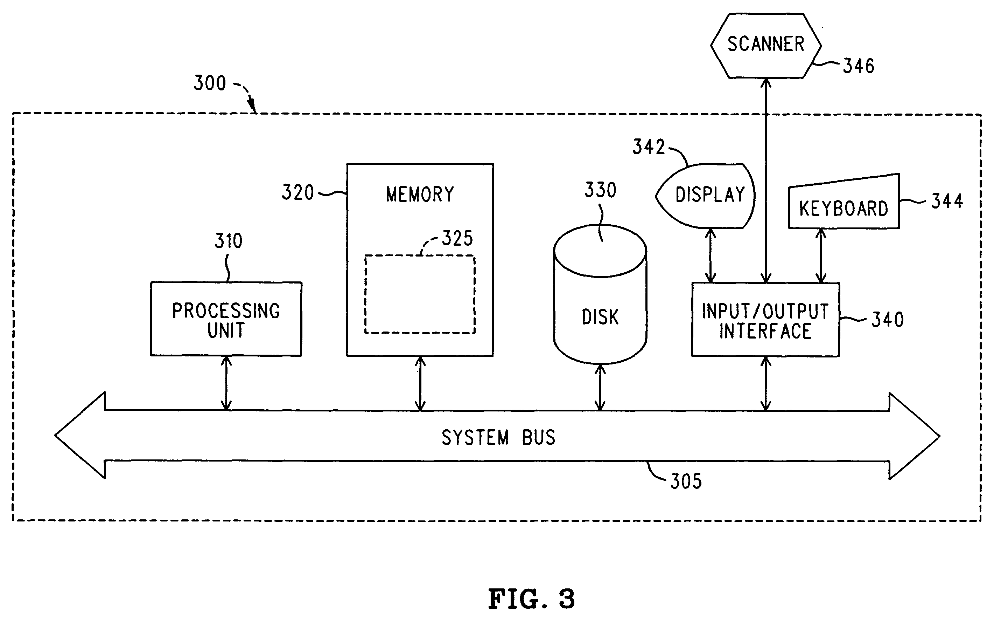

FIG. 3 shows a block diagram of a general purpose digital computer system 300 incorporating the present invention. A processing unit 310 is connected to system bus 305. The system bus 305 facilitates communications between the processing unit 310 and memory 320, a data storage disk 330 and an input/output interface device 340. The memory stores the software of the present invention as well as all data collected and generated by the present invention. An area 325 within the memory 320 is set aside for storage of the present method which is described more fully below. The input/output interface device 340 controls data communications between the bus 305 and a display 342, a keyboard 344 and scanner 100.

The scanner 100 may be either a grayscale scanner or a color scanner. A grayscale scanner returns a grayscale value for each pixel scanned. This value is typically 8 bits ranging from 0 to 255, with 0 being indicative of pure black and 255 being indicative of pure white. These values may vary and their indications may be interchanged without departing from the scope of the present invention. A color scanner typically returns three values (i.e., red, green and blue) for each pixel. Each value is 8 bits, ranging from 0 to 255, for a total of 24 bits of red-green-blue (RGB) image data per pixel. Varying scanner schemes may be used without departing from the scope of the present invention. For example, a scanner may return more than 8 bits for each RGB value increasing the total number of bits of RGB image data per pixel. In a preferred embodiment, scanner 100 may be either a ScanJet Vc or ScanJet Vp, both available from Hewlett-Packard Company, Palo Alto, California.

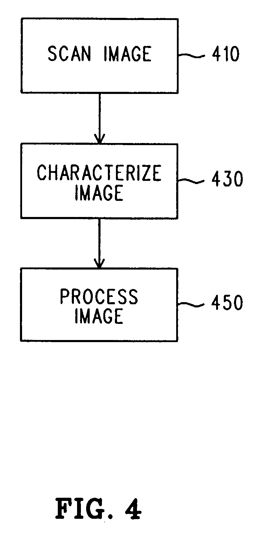

FIG. 4 shows a flow diagram of the present method. Block 410 first scans the image that is placed on scanner 100, converting the image into machine-readable format (i.e., pixels). Block 410 takes strips of image data from scanner 100 as the image is being scanned. These strips may either contain a single view or dual views of the image. Dual views of the image entail scanning the target with both a 300 dpi resolution (4-bit grayscale for text and lineart images) and a 150 dpi resolution image (24-bit color for photographs and "busy" color images). This particular method processes the 300 dpi scanned image, although processing of the 150 dpi scanned could also be done without departing from the scope of the present invention.

A strip of image data represents the full width of the image being scanned and is a predetermined number of pixels in height. Block 430 then characterizes the image based upon the data scanned into the computer. Finally, block 450 processes the image based upon the results from block 430.

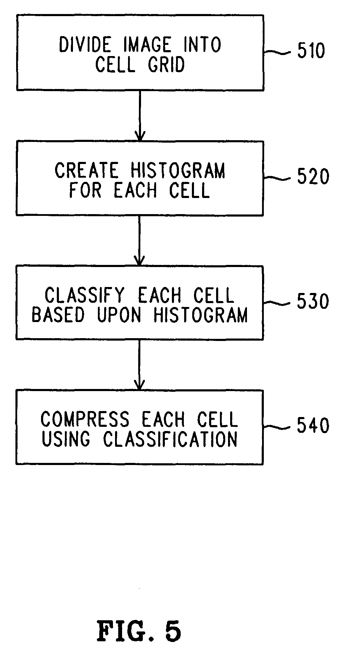

FIG. 5 shows a more detailed flow diagram of the present method. The present method, at block 510, first divides the entire scanned image into rectangular areas, or cells. Each cell has a predetermined number of pixels in width and a predetermined number of pixels in height. In one preferred embodiment, a cell is 16 pixels by 16 pixels. Block 520 then creates a histogram for each cell.

Block 530 then takes the histograms created by block 520 and assigns a type classification for each cell. This is accomplished by examining the histogram of the data within the cell. Additional fine-tuning of the classification is accomplished by examining the histogram of the cell data in conjunction with the surrounding cells. In a preferred embodiment, each cell is classified as one of four possible types:
I SINGLE_VALUE;
ii. DUAL_VALUE;
iii. CONTONE; and
iv. ORIGINAL.
A SINGLE_VALUE classification indicates the histogram has only one significant peak. Typically, a SINGLE_VALUE classification is indicative of white space. A DUAL_VALUE classification indicates the histogram has two significant peaks. DUAL_VALUE is indicative or text or lineart present in the cell. A CONTONE classification indicates that the histogram has no significant peaks. CONTONE is indicative of color graphics such as a photograph. An ORIGINAL classification indicates the histogram is not clearly any of the previous three types.

Block 540 then compresses each cell based upon its classification. The compression is as follows for each of the five classifications:
i. SINGLE_VALUE-- one byte;
ii. DUAL_VALUE-- 1-bit binary image;
iii. CONTONE-- an 8-bit down-sampled grayscale; and
iv. ORIGINAL-- uncompressed.
SINGLE_VALUE is converted to a single byte that represents the center of the peak of the histogram. DUAL_VALUE is converted to a binary (1-bit) image and two values; one value for each peak. CONTONE is down-sampled to one-half the original resolution in each direction but is kept at full bit depth. ORIGINAL, as the classification name implies, is simply the data as originally scanned.

Converting 8-bit grayscale to these new formats compresses the data without losing any valuable information. In order to identify the classification of the cell, three additional identifier byte are added in front of the cell data. The first byte is indicative of which compression method, or classification type, was used (e.g., SINGLE_VALUE, CONTONE, etc.). The second two bytes are simply value bytes, representative of the data contained within the cell. For cells that are 16 pixels by 16 pixels, for example, the resultant compression is as follows:
i. SINGLE_VALUE-- 128:1 (256:2);
ii. DUAL_VALUE-- 7.3:1 (256:35);
iii. CONTONE-- 3.9:1 (256:65); and
iv. ORIGINAL-- 0.99:1 (256:257).
As evident by the potential for compression, it would facilitate image processing if the majority of cells could be classified as SINGLE_VALUE.

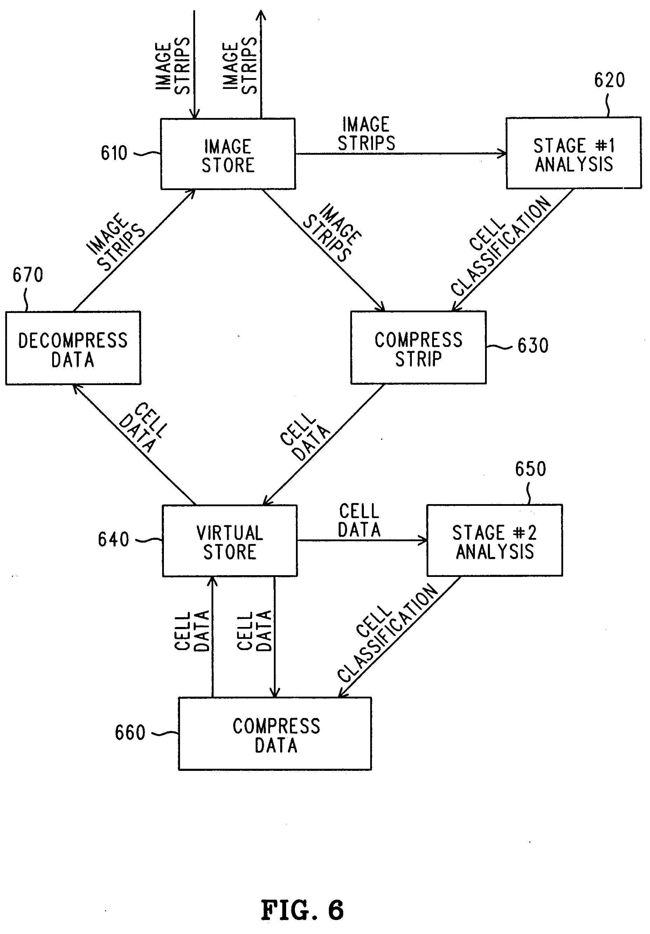

FIG. 6 shows a data flow diagram according to the present invention. Image strips are passed into and out from Image Store (block 610), a high-level application programming interface for the present invention. From there, image strips are passed onto Stage #1 Analysis (block 620). Stage #1 classifies cells within each strip according to the method described above (see FIG. 5 and accompanying discussion). From there, cell classification data is passed onto block 630, Compress Strip, which converts each image strip into compressed cell data. This cell data is then passed onto Virtual Store (block 640) which stores and retrieves cell data from memory as needed. If the RAM runs low, Virtual Store 640 can spool the cell data to disk. From Virtual Store 640, cell data is passed onto Stage #2 Analysis (block 650) which takes into consideration cells from different image strips for a further fine-tuning of the compression and classification of each cell. If any further compression has taken place (i.e., a cell has been re-classified by Stage #2 Analysis), block 660, Compress Data, handles that task.

Cell data is decompressed by passing cell data through the Virtual Store 640, onto block 670, Decompress Data, which converts the cell data back to image strips. These image strips are passed back to Image Store 610.

While the present invention has been illustrated and described in connection with the preferred embodiment, it is not to be limited to the particular structure shown. It should be understood by those skilled in the art that various changes and modifications may be made within the purview of the appended claims without deping from the spirit and scope of the invention in its broader aspects. For example, different classification types and compression schemes could be used in place of the above-mentioned four types. Also, a 32 pixels by 32 pixels cell size could be employed for fine-tuning of cell classification.

## Claims

1. A system for compressing image data, the system comprising:
a scanner (346) adapted to create machine-readable data indicative of a scanned object;
a computer (300) connect to the scanner, the computer adapted to receive (340) the machine readable data from the scanner;
wherein the computer is configured to compress the machine-readable data by classifying the machine-readable data as one of a plurality of classification types (630, 660), each of the classification types being related to the type of image data contained within a predetermined cell.

2. The system of claim 1, wherein the predetermined cell is 16 pixels by 16 pixels.

3. The system of claims 1 or 2 wherein the machine-readable data represents a scanned image which is divided into a plurality of cells and wherein the machine-readable data for each cell is classified as a function of a histogram of each cell.

4. The system of any of the proceeding claims wherein the machine-readable data is classified by cell with each cell being classified as one of four classifications.

5. The system of claim 5 wherein the four classifications include a first classification (SINGLE-VALUE) indicating white space, a second classification (DUAL-VALUE) indicating text or line art, a third classification (CONTONE) indicating graphical data and a fourth classification (ORIGINAL).

6. A method for compressing image data present in a scanned image, the scanned image scanned by an optical scanner, the method comprising the steps of:
(1) dividing (510) the scanned image into a predetermined number of cells;
(2) performing a histogram analysis (520) on each of the predetermined number of cells;
(3) assigning a classification type (530) to each cell based upon the histogram analysis, and
(3) compressing (540) each cell based upon its classification type.

7. The method of claim 6 wherein there are four different classification types: a first classification type (SINGLE-VALUE) indicating white space, a second classification (DUAL-VALUE) indicating text or line art, a third classification (CONTONE) indicating graphical data and a fourth classification (ORIGINAL).
